# EUROPEAN PATENT SPECIFICATION

(11) **EP 3 318 997 B1**
(45) Date of publication and mention of the grant of the patent: **21.09.2022**
(21) Application number: 16197237.7
(22) Date of filing: 04.11.2016
(51) Int. Cl.: G06Q 50/26, G06F 21/12, G06F 21/51, G06F 8/71

(54) **METHOD FOR ENFORCING AN AUTHORIZATION, METHOD FOR EVALUATION OF AN AUTHORIZATION, USE OF A COMPONENT FRAMEWORK FOR CONTROLLING A SAFETY CRITICAL PROCESS AND COMPUTER PROGRAM PRODUCT**
VERFAHREN ZUR DURCHSETZUNG EINER BERECHTIGUNG, VERFAHREN ZUR BEURTEILUNG VON EINER BERECHTIGUNG, VERWENDUNG EINES KOMPONENTENRAHMENS ZUM STEUERN EINES SICHERHEITSKRITISCHEN PROZESSES UND COMPUTERPROGRAMMPRODUKT
PROCÉDÉ POUR METTRE EN UVRE UNE AUTORISATION, PROCÉDÉ D'ÉVALUATION D'UNE AUTORISATION, UTILISATION D'UN COMPOSANT CADRE DESTINÉ À COMMANDER UN PROCESSUS DE SÉCURITÉ CRITIQUE ET PRODUIT DE PROGRAMME INFORMATIQUE

(43) Date of publication of application: 09.05.2018
(73) Proprietor: Thales Management & Services Deutschland GmbH, 71254 Ditzingen (DE)
(72) Inventor: LE MAGUET, Pierre, 70178 Stuttgart (DE); SCHROTH, Albrecht, 71083 Herrenberg (DE)
(74) Representative: Kohler Schmid Möbus Patentanwälte

(56) References cited:
- US-B2- 7 076 312
- US-B2- 9 354 865
- "EN 50129 Bahnanwendungen. Telekommunikationstechnik, Signaltechnik und Datenberarbeitungssysteme. Sicherheitsrelevante elektronische Systeme für Signaltechnik", EUROPAEISCHE NORM - EUROPEAN STANDARD - NORME EUROPEENNE, XX, XX, vol. EN 50129, February 2003 (2003-02), pages 1-98, XP009112742,

## Description

### Background of the invention

The invention concerns a method for automatically starting or stopping a safety relevant component to be executed thereby enforcing technically an authorization or refusal of deployment of a component instance to be executed within a component framework in a safety relevant context, wherein the component instance (A, B, C, D, E) to be executed is a sub-composite of a first composite instance (Z); the component framework comprising component instances and interface instances, use of a component framework for controlling a safety critical process and computer program product.

A method for evaluation of an authorization is known from [EN 50129] or [IES 61508].

An **interface** describes a sub-set of the behavior of one or more software components. It is obtained by considering only the interactions between components that take place in the context of this interface, and by hiding all other interactions - component-internal interaction, interactions with third party components, or interactions implying the components under consideration but which are not part of the interface. A **component** is an encapsulated building block of software, exposing its functionality via a defined set of interfaces. It is said that a component implements an interface. It is said that an interface qualifies the component that implements it.

Interfaces are defined artefacts, i.e. a definition of an interface must exist independently of the components that implement it. The interfaces of components compliant to a definition are called the instances of the definition. The interface definition gathers the behavior common to all its instances. Interface definitions are considered under configuration control: changes to the definition are possible only according to a defined change management process resulting in a change in **version.**

Changes in behavior of an interface instance towards its definition shall be seen as a deviation. Especially, if an interface is changed compared to a former behavior, originally compliant to an interface definition, it shall be considered uncompliant unless the interface definition has changed accordingly too. Similarly, a component implements its set of interfaces loyally to their definitions, unless it is considered defect.

Components are defined in two steps: component definition and component instances. The **component definition** gathers the functionality common to all instances instantiating this definition. **Component instances** are differentiated from each other by different sets of data / internal states.

Like instances, component definitions are supposed under configuration management, i.e. they become a version:
- If a component definition is changed in order to implement a new version of an interface definition, the version of the component definition shall change
- If a component definition changes, it shall be attributed a new version, even if it implements the same set of interfaces as before, with the same version number. This permits to differentiate, among others, between bug fixes.

For instance, a component definition may be the 'Software written to control Thales Points Version 2.2'. Two instances of this component definition could then be the controllers respectively for two different points of this type in two different stations.

A **component composite** is the combination of two or more instantiated components that yields a new component behavior. A component **composition** mechanism supports the creation of a larger structure by connecting components and the insertion or substitution of components within an existing structure. Since a composite behaves like a component it is versioned as well. A component composite, as well as components and interfaces, is defined in two steps: **composite definition** and **composite instances.**

A component part of a composite is defined as its **sub-composite.** The composite is said to be the **container** of the component. From the point of view of the composite itself, the interfaces of its sub-composites may be internal or external. From the point of view of the composite, **Internal interfaces** are those binding only sub-composites of the composite; **external interfaces** are those binding at least one component that is not a sub-composite of the composite.

A composite is univocally defined by its sub-composites and the **binding** of its internal interfaces (i.e. which interface of some sub-composite is expected to be bound to which other interface of another or the same sub-composite, respectively which interfaces remain unbound). Given the interface compatibility restrictions already consequence of their definitions, defining the interface binding may not be necessary to reach unambiguousness. In that case, the interface binding may remain implicit without impeding the composite definition.

Software composition is very similar to assembling hardware. **Hardware components** usually are bound to each other via their **hardware interfaces.** Together, hardware components build up **hardware assemblies.**

A component **framework** is a set of executable software elements dedicated to the creation and execution of composites within a component model. While instantiated, components may be **created** and **executed and reverse:**
- Creation/instantiation: computer resources (like memory, threads, processes) are allocated and defined. Component instances are tailored out of persistent data. The binding is part of this step (it may be considered a step for itself but this is not necessary in this invention).
- Execution: the use of the previously allocated computer resources is allowed (e.g. processes or threads are allowed for execution, timers enabled, ...). Interfaces are allowed for invocation: the component calls to the interfaces of other components are forwarded.
- Stop: the calls to the interfaces of a component by other components are not forwarded anymore: interfaces are not allowed for invocation anymore. Computer resources may be frozen (threads, processes, timers, ...).
- Destruction/deinstantiation: data tailoring the instance may be persisted if required. Computer resources are freed (memory, thread and in our definition interface binding).

Modern frameworks usually are capable to access **metadata** associated to components or interfaces. Metadata associated to components or interfaces are defined as a set of information characterizing the definition or instances of components or interfaces, and available to the framework. Like for components and interfaces, **metadata definitions** and **metadata instances** coexist.

For instance, additionally to the already introduced version, the data of the company having produced a component may be defined in very detailed fields: date of release, name of the company, street number, street name, zip code. For each of those **fields** of metadata, a **type** has to be defined. In the company example, the names may be coded via strings, street numbers and zip-codes via constrained numbers. Another example is to qualify a component instance with its variant. In this case, the **value** of the variant field of a component instance is picked up out of an enumeration defined along with the component definition: the set of variants available for the component. A common variant for human machine interfaces is the language. In that case, the metadata definition is the set of languages potentially supported by a component, the value of the metadata field instance is the language actually supported by a given component instance.

Metadata may be frozen at component definition - see previous examples. Metadata may also be frozen at component instantiation. They may change all along the life of a component instance. In the examples above, company fields are likely to be frozen at definition. The variant field may be frozen at instantiation. Some metadata may remain dynamic during the life of the instance. The phone number of the hotline of the company may be dynamic in order to be able to change over the years. The instance may also publish some internal states: The language being supported by a component instance may vary along its lifetime according to the user it supports at a given moment. In that case, the framework may be capable to react on the changes of the metadata.

It is a common praxis that most metadata related to a component are **published,** i.e. provided to the other components, by the component itself. This means that to get access to the metadata of a component, an observing component needs to be bound to the publishing component by one of its interfaces (that publishes the metadata). Some metadata may be generated by the framework about the component. For instance, the framework may publish dynamic administration data related to a component like the date it was started, how much CPU or memory it consumes. Those metadata may be published by means of an interface added to the component instance by the framework at runtime (independently of the component definition). In this case, the frame metadata is considered published by the component itself. The framework may also offer an own interface that publishes those metadata generically, the component for which the metadata are retrieved being a parameter of the framework's interface. Finally, some frameworks also provide additional interfaces for the indirect access to the metadata published by a component, without having to be bound to the component. In this case, both methods of publication are available. From the point of view of safety-uncritical component based design practices, defining the state of the art, component frameworks build composites based on the component definitions they store in their component database. Composite definitions are similarly made available to the framework. In a last step, the framework gets the instruction to build one instance of a composite (to instantiate it). Composite definition and instantiation instruction may be done separately or not, according to the framework.

The definition of the composite may be performed with different degrees of freedom. An explicit way to do is to associate in the composite definition each component with some metadata, especially the version. This way of doing, very defined, inhibits more dynamic practices, where only interfaces metadata, especially versions, are defined.

With the explicit way, one person defines how the components are gathered. One single human error may lead to an unwished configuration. No technical measure is provided by the framework to allow that a composite is created or started only if two persons came independently to the same specification of the composition. The explicit way is widely represented by Microsoft's manifest technic, as described in [MS MANIFEST]. The composite is named therein side-by-side assembly (§1.2). A composition is described by means of manifests (§4.2).

As described by the wikipedia page about 'Side-by-side assembly', the manifests were introduced "with Win98 second edition and Windows 2000" and maintained in later edition as "attempt to alleviate the problems that arise from the use of dynamic link libraries known as 'DLL Hell'. Such problems include version conflicts, missing DLLs, duplicate DLLs, and incorrect or missing registration. In side-by-side, Windows stores multiple versions of a DLL in the winsxs subdirectory of the Windows directory, and loads them on demand."

With implicit composition, composites are defined without defining the versions of components themselves (only interfaces). A component can be replaced by one of its evolutions (see below)- as long as implementing the same versions of interfaces. A component can be replaced by components with no relationship (e.g. components which are implemented with different algorithms, by different teams or companies, ....) as long as implementing the same interfaces with the same versions. Modern frameworks leverage the freedom of implicit composition to save the state of a component, stop it, replace it with a new version, initialize the new instance with the old state, and restart without interruption of service. If a framework is given the ability to automatically retrieve the most up-to-date version of component and composite at its disposal, it may autonomously upgrade software without interruption of service, a technic called seamless deployment. Seamless deployment is a key feature of the modern, highly available, IT systems for which component frameworks are designed. Typically, the upgrade of big websites is not noticeable for end users.

This freedom left to the framework permits to replace versions with a low administrative overhead. It happens at the cost of the unambiguousness of the configuration management. In big composites, several versions of sub-composites may be available with different versions of interface and it may be impossible to combine the most up-to-date version of each component without violating the version control of interface definitions. The framework has to choose between several local optima. The rules for choosing, or their consequences for the assembly, may not necessarily be transparent to all component designers. The risk brought-in by the ambiguity, however, is judged low enough by the companies implementing continuous deployment because they size the quality measures prior to composite definition and definition of the composite instructions according to their loss in case of problems due to an ambiguous deployment. They judge the probability of defect due to incompatible set-ups low enough to be accepted. In case such a bug is detected, the software is seamlessly restarted with a former version while the source of the bug is searched and a new version of the component solving the problem is prepared.

The implicit way to define deployments is currently the industry trend. For instance, in [JBOSS2002], explicit dependencies are addressed. All over the extract, the composing, binding etc. is defined. On Page 40, explicit binding as (per version of components) is introduced as optional. At no place, a verification of the allowance of a binding, as specified by an instance independent from the binding specifier, is defined. In [JBOSS2016], explicit dependencies are not presented anymore: Instead Chapter 3, § 3.1.6. Class Loading Precedence, presents how the framework performs automatic component identification and rules about some ways of avoiding ambiguities are presented - for instance running several versions at the same time in a framework. Here, as for [JBOSS2002], a verification of the allowance of a binding, as specified by an instance independent from the binding specifier, is defined at no place.

Although very high levels of quality may be achieved by single companies, the ambiguity associated to implicit composition is not acceptable in a safety critical context, where errors may lead to the loss of human lives: legal frames demand the evidence that no hazardous errors will happen before the deployment - without bargain about cost and benefits, or try and withdraw strategy.

Also, an important driver of modern safety norms is that somebody shall respond about organizational risk - the so called traceability. The reason is that industrial history shows that room for unclear responsibilities is a frequent ingredient of accidents. For instance, in [ORG-ACCID], the Piper Chieftain Crash at Young example presents a situation about conflicting goals. With current state of practice as defined by [EN 50129], only systems (and components) for which a safety manager responds shall be deployed in the European railways, as documented in a safety case. The safety case is a document or set of documents that engages in a traceable way the responsibility of its author. It is associated to a univocal identification of the system it covers. Typically, the safety case defines further system components and responsibilities - sub-components of the safety case's scope that need their own safety case or systems outside the safety case, that the safety case presupposes to remain valid.

Lastly, safety norms enforce that the quality of work-products influencing the safety of a software (executable, parametrization) depend on more than one person by introducing independent tests, quality criteria for these tests like code coverage as for instance in [IEC 61508]. In this document, independ-ency of safety verification is addressed in Part 1 chapter 8 p.54 to 58. An example of quality criteria for verification is the definition of criteria R1 to R3 in part 3.

The requirement for traceability in system development and reproducibility of deployment, incl. loyalty to approved configuration, excludes a component being claimed compatible with an interface only. It has to be compatible with components also. Therefore, although safety critical development organization rely on high quality standards that would "probably" enable that "nothing happens", state authorities are reluctant to authorize such generic validations at interface level.

These principles are presented in detail [DEV-SAFE-SW]. In §18.4, the main stakes are presented (protecting unauthorized changes, managing configuration, ensuring that the right software is downloaded, ...). §18.5.1 presents the technical requirements set to field downloads such as protection from inadvertent downloading, determination of inappropriate software loads. §18.5.3 emphasizes the insurance that the software downloaded has been approved by the certification authority, also under consideration of the hardware that should host is. It relies ensuring that the part number of the software is confirmed after the load.

This is very much similar to the practices currently used in the rail domain.

For instance, for Thales, current product generation bases on the TAS Platform as its safety critical middleware. This layer comprises
- Hardware boards derived from 'non-safe' embedded products after specific hazard analyses
- An operating system layer, incl. drivers.
- Start-up and cyclic on-line tests ensure that no latent failure lies in the system
- A home-made fault tolerance layer (voting, monitoring of real-time behavior) insulates the safety critical software (called thereafter the application) and the lower (hardware and OS) layers, making sure that failures express only in the API presented to safe application, and in defined manners that the application can process safety (missing message, detected delay, ...)
- The Unix memory protection between processes of a same computer is used to avoid that failures of one module (for instance erroneous pointers) of the application impacts the others other than via missing messages or faulty messages on voted message queues.
- Each application module is designed to process safely and at any time delayed (missing) messages or disappearing neighbor processes (which result in disrupted message flows).
- A safety critical (themselves considered part of the application) communication stack adds message protection for communication with neighbor safe computers in such a way that the receiver can detect any fault taking place during communication (and some faults have led to the genesis of the message)

In former TAS Platform generation (1.x.x), the OS used was a proven in use real-time SUN-OS derivate, Chorus. This kernel was little enough to have been assessed for itself. Such OS are nowadays not supported anymore. Therefore, in recent years (2.x.y), Linux was introduced to benefit from new hardware generations. Its wide deployment also insures some level of quality - counterbalancing its lack of traceability, for instance due to its frequency of upgrade. Linux could be introduced based on the barriers towards its failures built in the home-made fault tolerance layer. This fault tolerance layer, had to grow mature enough on the previous little, "controlled" OS, to convince the safety authorities.

Once the level of maturity required to convince the safety authorities reached, TAS Platform 1.x concepts were improved according to the experienced gained in the past decade and the new requirements set by the introduction of a COTS OS. It led to the definition of TAS Platform 2.x. At the time the TAS Platform 2.x development was launched, frameworks were established on servers of a size not fitted to embedded systems. The concept maturation for TAS Platform 2.x had not yet been completed. The introduction of a framework seamed so remote it was not even evoked during the feature definition.

As a consequence, TAS Platform 2.x proposes some remote download of application software via proprietary protocols very close to TAS Platform 1.x and based on the disk partition concept - still valid for Linux. The version control between partitions and/or application modules remains an explicit responsibility of each application module, without transverse support.

Partition based upgrade requires a full restart of the TAS Platform computing node - and the interruption of all application modules hosted on the computer. This refrains from hosting more application modules on one safe computing node, although last generation hardware boards would allow it. A proprietary software push (module wise upgrade in the background without reboot of the platform) is currently not intended for TAS Platform 2.x because too expensive to develop.

The current development status is that, to address the obsolescence of TAS Platform 1.x, safety critical applications (axle counters, field element controllers, interlocking, movement authority units) introduce TAS Platform 2.x. Due to the design changes implied by the technically enforced version checks, and the lack of central technical support for it, as well as the necessity to stop the full system, this proprietary remote download will not be supported by all products in the first step.

As a summary, modern component frameworks and their benefits face suspicion in safety critical contexts because:
- The definition of composites and instantiation instructions may be subject to human errors,
- To benefit from their most advanced feature, the ambiguity left in the definition of composites is contradictory to the very claim of preventing accidents

US 7 076 312 B2 discloses a procedure for issuing an approval for software objects, and an approval control prior to the download of the software to its run-time environment. However, once the software object is downloaded, it will be implemented and executed unconditionally.

US 9354 865 B2 discloses a method for controlling the development of a software application. The method comprises the evaluation whether a new component of a software application complies with the architecture in which the component is to be applied. This evaluation is carried out by a policy based event engine. In a repository a plurality of artefacts are stored which correspond to the component which should be implemented in an application. If a new component is not conform with the architecture the respective component is rejected and corrected in order to fix the violation, i.e. in this case the new component is not implemented in the software application.

### Object of the invention

It is therefore an object of the invention to provide a method for evaluating the authorization of a safety relevant component, i.e. whether the execution of a component is authorized in a safety relevant context, as defined by approval authorities in charge. It is therefore an object of the invention to provide a method for enforcing this authorization.

Ultimately, the combination of these inventive methods enable to host a multitude of application modules on one computing node while preserving or even reinforcing the safety levels reached by current practices. Combined with security features not addressed by this patent application, the invention is an enabler for safety capable cloud computing.

### Description of the invention

This object is solved by the method according to claims 1, the use of a component framework according to claim 14 and a computer program product according to claim 15.

The current invention presents enhancements in order to enable dynamic assembly by component frameworks, while excluding the risk associated to ambiguity or human errors in composition, as defined by current state of the art in safety practices.

In order to describe the invention, several new definitions are taken about safety processes:
An **approval authority** is defined herein as any person or organization in charge of issuing a safety authorization prior to the deployment of a safety relevant control system. Preferably the approval authority is independent from the developers implied in the development of the components to be authorized or of a composition of the composite comprising the component to be authorized.

In this invention, the authorization or refusal delivered by an approval authority is formalized as an **approval statement,** each approval statement comprising a **recommendation** and a **scope.**

The recommendation defines whether its associated approval statement enables or inhibits the deployment. A recommendation can be "approved" or "refused":
- Approved recommendation: The approval authority tolerates the deployment of a composite for a given scope.
- Refused recommendation: The approval authority has explicitly defined that a composite shall not be deployed in a specified scope. A recommendation always has a start date - may it be its date of delivery - and may be limited in time, or not. A recommendation **qualifies** a scope.

An approval statement is said to be approved or refused if its recommendation is approved or refused.

The scope of an approval is the formalization of the context and conditions for which the recommendation is issued. The scope of an approval associates components, interfaces and bindings with the **safety relevant metadata** that define these context and conditions. As several composites can be considered, lists of metadata can be described by use of generic descriptions. Like bindings, scopes can make use of implicit binding.

Given a composite instance and a scope, the scope is said to cover the composite instance if all component instances and their metadata constituting the composite instance match the metadata specified by the scope. Note that for an approved approval statement this means that all interfaces connecting sub-composites of the composite are covered by the scope. Interfaces of sub-composites foreseen to be bound outside the composite are not necessarily covered by the scope.

**Safety relevant metadata,** the one considered for this invention, are defined as any metadata that approval authorities may judge relevant to determine whether instances of components or interfaces can be composed together in a safety relevant application.
- The component versions of the sub-composites of a composite are, in a safety relevant environment, a restricting element of component composition. The sole compatibility of the interfaces implied in the component is not sufficient.
- Variants of components, as they tailor the composite's behavior, may influence an approval statement.
- The **mandatory character** of the binding of an interface, as seen from the perspective of the component definition, may influence an approval statement: while defining a component, a designer may tag which interfaces *must* be bound before the component is started, i.e. which interfaces must have a partner unless he cannot guarantee the safety of his component. This is true also while defining a composite, for external interfaces: the designer may not know yet in which composite his own composite will be inserted. But he/she can determine that some interfaces must have found partner components before his/her own composite or its components are allowed to execute.
- The mandatory character of a sub-composite may be defined: if a sub-composite is mandatory for its composite, the composite may lose its authorization if the composite cannot be started or is stopped. If the sub-composite is optional, the composite may remain active without its sub-composite.
- Component of interfaces may be associated with **hierarchy levels.** For instance, some components may be dedicated to safe transport protocols (lower layer) while others deal with control and automation (upper layer). A scope may define the hierarchy levels it expects from the components that may be bound to its external interfaces.
- The **life-cycle** of applications and components in safety-related domains is supposed to be divided in operational phases of different safety relevance. The operational phases and their safety relevance are supposed to be defined by approval authorities (e.g. Federal Railway Office) according to criteria not scope of the invention. Exemplarily, following life-cycle phases may be supposed:
   ∘ Hot phases of a system's life-cycle are those in which it delivers at least one safety relevant function, i.e. safety of life is engaged. Typically, as soon as a train moves in an area controlled by an interlocking/movement authority unit, especially with passengers, the system is in a hot phase.
   ∘ Cold phases are those during which the system provides no safety relevant function - for instance when the system is being commissioned without train movements, e.g. during some maintenance sessions for which the traffic is stopped.
   ∘ Warm phases are those during which the system does perform some safety relevant functions, but not in full extend. The approval authority is aware of it, acknowledges the necessity, and allows operation under restrictions. Such phases typically comprise field system test with train movement. Special measures are taken in order to ensure the required safety of the operations - drivers with enhanced skills, specific test organization, only test cases are driven, no passengers or freight trains, etc.

The invention relates to a method comprising the evaluation of an authorization of a component instance, i.e. whether the execution of a component instance within a component framework in a safety relevant context is authorized by an approval authority, the method comprising: providing the information necessary for the evaluation in a form suitable for automated processing by software; the method comprising: providing a list of approval statements each comprising a recommendation and a scope, wherein the scope is specified by means of metadata; providing an approval control function with access to the list of approval statements; carrying out an approval control by means of the approval control function.

Thus, according to the invention approval statements are provided comprising metadata (e.g. version, variant, life cycle, bindings etc.). This enables the approval statements to be processed by computer and to be available in any arbitrary number and for an arbitrary number of component instances at an arbitrary number of computers. The approval statements are preferably issued by an approval authority.

According to the invention, the component instance to be executed is a sub-composite of a first composite instance. According to the invention, the approval control function evaluates the component instance as being authorized only if the approval control function finds an approval statement in the list of approval statements, which fulfills both: the scope covers the composite instance and the recommendation is "approved", wherein the scope is said to cover the composite instance if the metadata of all component instances and interface instances of the first composite instance match the metadata specifying the scope.

The composite instance comprises interface instances and component instances which in turn are qualified by metadata. With the present invention the metadata of the instances can be easily compared with the metadata of the approval statements, thus providing an easy and reliable method to evaluate whether a component instance is authorized or not.

The approval control function checks whether composite instantiations are covered by at least one valid approval statement and in which context - especially the life-cycle phase. The approval control function may access the metadata of composite instantiations either directly or via the framework, according to their method of publication. According to the success or failure of checks, the approval control function may allow or forbid a change of components in life-cycle phase. If necessary, the approval manager may enforce, or lead the framework to enforce a stop of the component.

In a preferred variant, the first composite instance is a sub-composite of a further composite instance, wherein the approval control function evaluates the component instance as being authorized only if the approval control function evaluates the further composite instance as being authorized by the approval authority. In case the composite instance (here: first composite instance) which contains the component instance to be evaluated is contained in another composite instance (here: further composite instance) it has to be ensured that the first composite instance which contains the component instance to be evaluated is compatible with other sub-composites of its common container (further composite instance).

According to the invention, the approval control function evaluates a component instance as being authorized only if the approval control function determines that the list of approval statements does not contain an approval statement, which fulfills both: the scope covers the component's composite and the recommendation is "refused".

Further according to the invention, the approval control function evaluates a composite instance as being authorized only if the approval control function determines that the list of approval statements does not contain an approval statement, which fulfills both: the scope covers the composite's subcomponent and the recommendation is "refused".

The metadata of the interface instances and the component instances qualify the interface instances and the component instances and are required for evaluation. In a preferred variant, the metadata of the interface instances and of the component instances are advantageously provided to the approval control function by means of the component instances themselves.

In one inventive alternative of the inventive method the approval control function is implemented in an approval manager, wherein the approval manager is a component instance. The approval manager can be added to existing frameworks. In this case the used framework does not comprise an approval control function.

Alternatively the metadata of the interface instances and the component instances can be provided to the approval control function by means of the framework, for instance because the approval control function is hidden by the framework, or is a part of it, and does not "see" the components.

In another inventive alternative of the inventive method, the approval control function is implemented in the component framework. I.e. the component framework comprises an approval control function.

In a preferred variant the approval control function controls metadata of components and/or interfaces which are deemed to be required by the approval authority, wherein the metadata controlled by approval control function in particular characterize at least one of: component definition, interface definition, component version, interface version, component variant, interface variant, the mandatory character of an interface or a sub-component, the life-cycle phase in which a component is or in which the components implied in an interface are, and hierarchy level of components implied in an interface.

It is preferred that the approval control function comprises version control functions (in particular a component version control function). Accordingly the metadata of the scope preferably comprise the version of the component's definition. Nevertheless, it is also possible to define a scope, which is "refused" independently of its version, e.g. for composite instances which are only permitted during maintenance. In this case no version control is required. A version control comprises checking out whether components and/or interfaces to be connected with each other are approved for each other. For version control the scope comprises version-numbers, wherein the version control checks whether the version number qualifying the component to be used and the version number of the scope of approval it is compared to comply with each other.

Metadata qualify a hardware component and thus they also qualify a hardware composite. In a preferred variant a hardware component and its characteristics are made available to the approval control function by providing a substitute software component comprising metadata formalizing the characteristics of the hardware component. E.g. in case of an interlocking controlling a (real) train station or an area of a station, life-cycle phases may apply (from an operational point of view) to the real system: a station for example may be under commissioning, maintenance, operation. In this case, the interlocking software component may follow these life cycle phases.

In a special variant the scope further comprises the metadata of the substitute software component, in particular to enable the validations of authorization concerning the relationship between hardware sensors and software components taking the hardware-sensor as input, or concerning actors controlled by software components, or concerning computing facilities hosting the software components, or any combination of those.

The hardware component can be part of a hardware assembly, wherein the hardware component itself is a further hardware assembly of further hardware components, and wherein for the further hardware components further substitute software components are provided. A physical assembly is a composite of hardware-components, the physical assembly itself being qualified by metadata, e.g. life-cycle phases, hardware version, hardware variant. According to the invention it is advantageous if the substitute software component of the hardware assembly is made available to the framework as a composite of the further substitute software components.

If two hardware components are physically interfaced to each other, in particular within a hardware assembly, wherein for each hardware component a substitute software component is provided, it is preferred that for the physical interface between the hardware components a substitute interface is provided, wherein the substitute software components of the hardware components are interfaced by means of a substitute interface, and that the substitute interface is made available to the approval control function.

It is preferred that a relationship of hierarchy or equivalence exists between fields and/or values of the metadata, wherein this relationship is known by the approval authority and is used by the approval authority to define the scopes of approvals, characterized in that this relationship is available to the approval control function and is used to assess the bindings according to the intend of the approval authority. For instance the following relationships may exist:
- For the field "life-cycle phase" any configuration approved for 'operations' may also implicitly be allowed for 'maintenance'.
- If versions are hierarchized in several fields (e.g. x.y.z), the last field may be chosen so that all versions equal but for the last field are compatible, by definition of the approval authority. For instance, 1.4.2 may be compatible to 1.4.3. In that case, the scopes of approval may elude the last field, specifying only 1.4 or 1.4.^{∗}.

This is a specific case about how the approval control function is provided with its scopes.

In accordance with the invention multiple approval authorities can provide approval statements, wherein for each approval authority an evaluation of the authorization according to the invention is carried out. For instance, according to CENELEC, a system shall be deployed only after successful validation by a first approval authority and successful assessment (of the validation) by a second approval authority and successful approval (of the assessment) by a third approval authority. In order to evaluate the system's authorization, the number and type of the required approval authorities depends on the safety insurance processes implemented by a company, required by a norm or a legal frame and are determined by the deployment configuration manager according its legal duties.

The enforcements ruling their relationships are implementation matter. For instance, the approval control function may require an approved recommendation from all approval authorities involved in the authorization. As each approval authority specifies its approval statement independently of the other, and the evaluation of the approval function delivers a final authorization only if an authorization could be delivered for all approval authorities, it permits to mitigate human errors in the specification of the scopes of approval.

Lastly, as the approval control function is software, supposed of the quality suitable for safety critical contexts, it is not subject to the human errors a human verifier would be prone to with a 'local verification procedure' based on paper descriptions of expected configurations. So this particular implementation brings in an improved safety towards paper-based verification.

In a preferred variant a validity time window is provided for the authorization, e.g. max. 5 years from the first day of authorization on.

It is preferred that the approval control function controls the authorization of a component prior to the start of the component.

In a preferred variant of the inventive method the approval control function controls the authorization of a component, when the metadata implied in the authorization of the component have changed, and the authorization is withdrawn: if the authorization is not valid anymore; in particular if the authorization is not valid anymore and no new valid authorization could be found.

A preferred variant provides that several composites are evaluated to be authorized if, once composed together, the resulting composite is covered by an approved recommendation

Accordingly a preferred variant provides that several composites are evaluated to be refused together if, once composed together the resulting composite is evaluated by the approval function to be refused.

The approval control function preferably evaluates a composite to be authorized if it evaluates its subcomposites as being authorized, provided the composite is fully covered by the union of the parts of the composites. I.e. the approval control function evaluates a composite as being authorized if partial authorizations are issued for parts of the composite.

Further, the approval control function preferably evaluates a composite to be refused, if it evaluates a partial combination of components of the composite as being refused

The present invention also relates to a method for enforcing technically an authorization or refusal of deployment of a component instance to be executed within a component framework in a safety relevant context, wherein the evaluation of the authorization is carried out by using a method as described before, and wherein a consequence concerning the operation of the safety relevant component is carried out automatically in dependence of the authorization or refusal. Thus an autonomous control (independent of a maintenance engineer) of a safety relevant component is realized. For instance, in case of an evaluated refusal (refused recommendation) the refusal information is not (only) shown to the maintenance engineer, but a required action can automatically be triggered (enforced), like stopping the component. Similarly, in case of an approved recommendation, the component may be started automatically.

The framework preferably manages the component instance via a composition mechanism.

In a preferred variant the approval control function evaluates and/or enforces the authorization of a component prior to the start of the component, or when the metadata implied in the authorization of an already started component have changed, wherein the authorization is withdrawn if the authorization is not valid anymore; in particular if the authorization is not valid anymore and no new valid authorization could be found or, or when the metadata implied in the authorization of a not yet started component have changed, wherein the component is started if a valid authorization could be found.

The invention also relates to the use of a component framework for controlling a safety critical process, wherein an approval control function is provided for evaluating whether a component instance is authorized or refused. In particular the inventive method is advantageously used if an old component shall be replaced by a new component.

Further the invention concerns a computer program product directly loadable into an internal memory of a digital computer comprising software code portions for carrying out the afore described methods.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawings

The invention is shown in the drawing.
- FIG. 1: shows the structure of a composite.
- FIG. 2: shows the structure of a framework according to the state of the art.
- FIG. 3: shows the inventive method by using a framework comprising an approval control function.
- FIG. 4: shows the inventive method by using a framework with approval control function and an approval function as add-on.

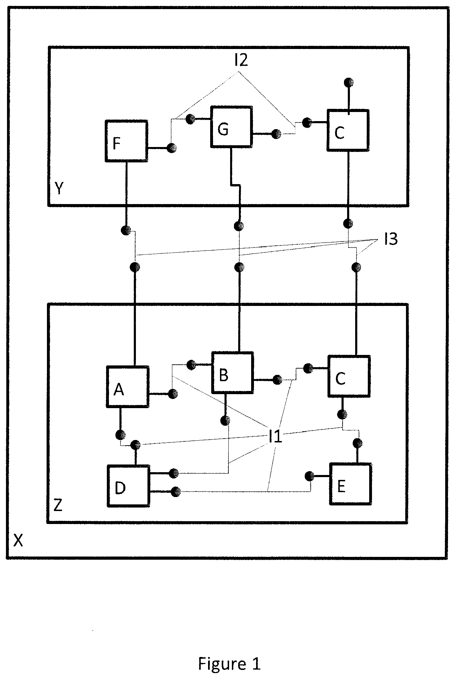

**Fig. 1** shows components **A, B, C, D, E, F, G,** wherein components **A, B, C, D, E** are sub composites of a first composite **Z** and implement internal interfaces **I1** and external interfaces **13.** The components C, F, G are sub-composites of a second composite **Y** and implement internal interfaces **12** and the external interfaces 13. The first composite Z and the second composite Y in turn are sub-composites of a further composite **X.** The external interfaces 13 of the first and second composite are internal interfaces of the further composite X. The composite is defined by component instances required as sub-composites and the bindings between the sub-composites with interface versions. The components are defined by its interfaces and their versions.

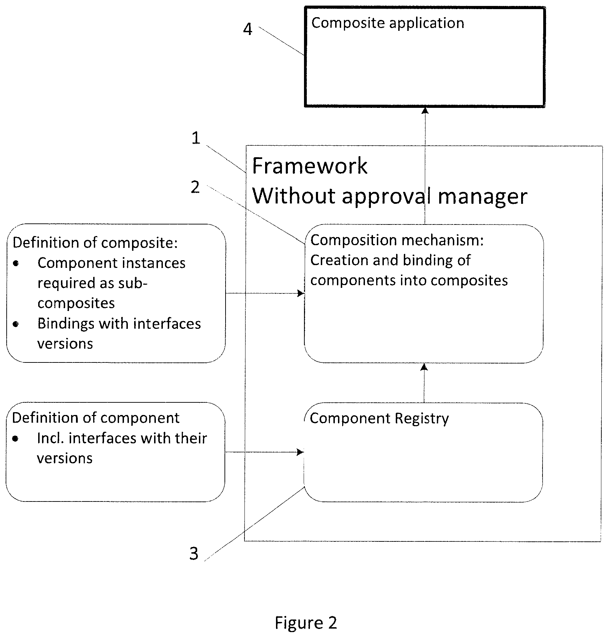

**Fig. 2** shows a framework **1** according to the state of the art, i.e. without approval control function. The framework comprises a composition mechanism **2** to which definitions of the composites are fed. The framework 1 further comprises a component registry **3** to which definitions of the components are fed. With the aid of the definitions the composition mechanism 2 creates the composites by binding the components. According to the state of the art the composites are then used for a composite application **4.**

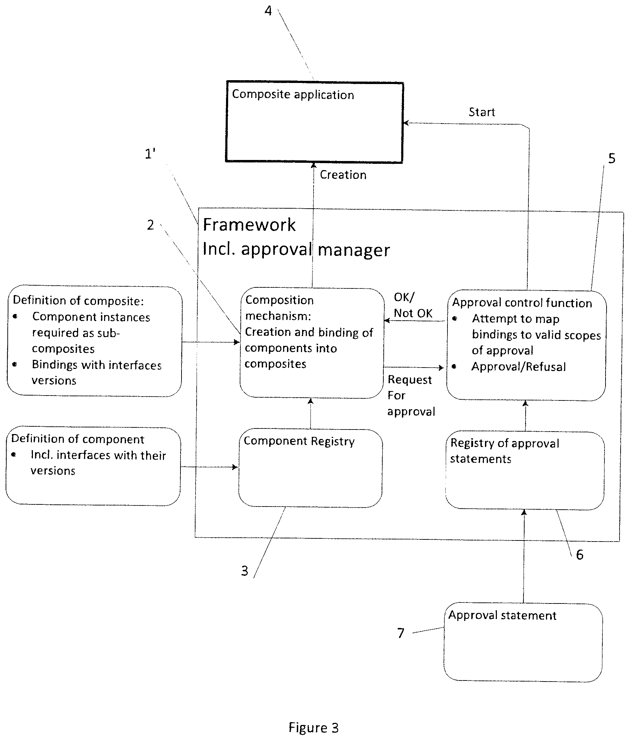

In **fig. 3** a safe component framework **1'** is shown which includes an approval control function **5** and a registry **6** of approval statements. According to the invention a list of approval statements **7** is provided by an approval authority. Each approval statement comprises a scope (specified by means of metadata) and a recommendation defining whether the approval authority tolerates the deployment of a specific composite for the given scope. The approval statements are fed to the registry 6 of approval statements to which the approval control function 5 has access.

The composition mechanism 2 sends a request for approval for an intended composite to the approval control function 5. The approval control function 5 attempts to map bindings to valid scopes of approval of the components of the intended composite by carrying out an approval control.

In case the approval control function 5 finds an approval statement in the list of approval statements 7 with a scope whose metadata match with the metadata of all component instances and interface instances of the intended composite instance, the approval control function 5 evaluates the intended component instance as being authorized, allows the creation of the respective composition by the composition mechanism 2 and starts the composite application. In case no approval statement is found which fulfils the above mentioned requirements, the creation and the application of the composite are inhibited.

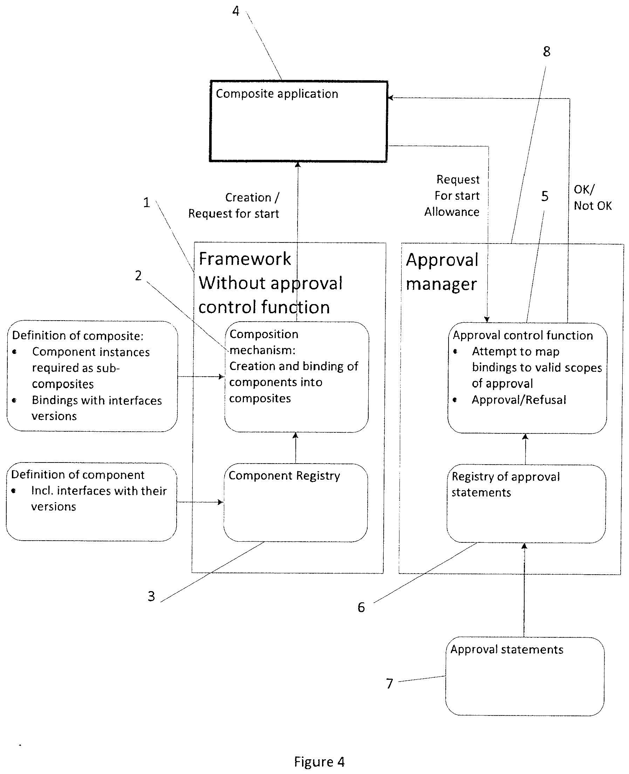

In **fig. 4** another variant of the inventive method is shown using the framework without approval control function 1 known from the state of the art. In addition to the framework 1 without approval manager function shown in fig. 1 an approval manager **8** is used. In this case the approval control function 5 and the registry 6 of approval statements are implemented in the approval manager 8 and are not part of the framework 1. This enables to carry out the inventive methods for safety relevant applications even with frameworks 1 without approval control function. The composition mechanism 2 of the framework 1 without approval control function creates a composition and sends a request for start to the composite application 4 which in turn sends a request for allowance to the approval control function 5. Again the approval control function 5 checks the approval statements of the registry 6. In case an appropriate approval statement is found the approval control function 5 initiates the start of the composite application 4.

### Literature

[DEV-SAFE-SW] Developing safety-critical software, A practical guide for aviation software and DO-178-C compliance Leanna Rierson; CRC Press, 2013, ISBN: 978-1-4398-1368-3
[EN 50129] European standard, EN 50129, Feb 2003 Railway applications - Communication, signalling and processing systems - safety related electronic systems for signalling.
[IEC 61508] International Electrotechnical Commission norm 61508 Functional Safety of Electrical/Electronic/Programmable Electronic Safety-related Systems April 2010
[JBOSS2002] JBoss Administration and Development Scott Stark, Marc Fleury, JBoss Group Sams Publishing, 2002 ISBN-10: 0672323478, ISBN-13: 9780672323478
[JBOSS2016] https://access.redhat.com/documentation/en-US/JBoss_Enterprise_Application_Platform/6.2/html/De velopment_Guide/chap-Class_Loading_and_Modules.html# Module_Dependencies
[MS MANIFEST] https://msdn.microsoft.com/en-us/library/dd408052%28v=vs.85%29.aspx
[ORG-ACCID] Managing the risks of organizational accidents James Reason Taylor & Francis Ltd; 15. December 1997) ISBN-10: 1840141050, ISBN-13: 978-1840141054

## Claims

1. Computer-implemented method for automatically starting or stopping a safety relevant component to be executed thereby enforcing technically an authorization or refusal of deployment of a component instance to be executed within a component framework in a safety relevant context, wherein the component instance (A, B, C, D, E) to be executed is a sub-composite of a first composite instance (Z); the component framework comprising component instances and interface instances, **characterized in**
**that** an evaluation of the authorization is carried out by using a method for evaluation of an authorization of a component instance (A, B, C, D, E), i.e. whether the execution of a component instance(A, B, C, D, E) within the component framework (1, 1') in a safety relevant context is authorized by an approval authority,
the method comprising:
providing metadata of the interface instances and the component instances in a form suitable for automated processing by software;
providing a list of approval statements (7), the approval statements (7) formulating the authorization or refusal delivered by the approval authority, each approval statement (7) comprising a recommendation and a scope,
wherein the scope is specified by means of metadata and associates components, interfaces, and bindings with the safety relevant metadata for which the recommendation is issued;
the recommendation defining whether its associated approval statement enables or inhibits the deployment, wherein a recommendation can be "approved" or "refused";
providing an approval control function (5) with access to the list of approval statements (7),
wherein the approval control function (5) is implemented in an approval manager (8), which is a component itself, or
wherein the approval control function (5) is implemented in the component framework,
carrying out an approval control by means of the approval control function (5), wherein the approval control function (5) evaluates the component instance (A, B, C, D, E) as being authorized only if the approval control function (5) finds an approval statement (7) in the list of approval statements (7), which fulfills both: the scope covers the composite instance (A, B, C, D, E) and the recommendation is "approved", wherein the scope is said to cover the composite instance (A, B, C, D, E) if the metadata of all component instances (A, B, C, D, E) and interface instances (I1) of the first composite instance (Z) match the metadata specifying the scope,
wherein the approval control function (5) evaluates a component instance (A, B, C, D, E) as being authorized only if the approval control function (5) determines that the list of approval statements (7) does not contain an approval statement (7), which fulfills both: the scope covers the component's composite and the recommendation is "refused", or if the approval control function (5) determines that the list of approval statements (7) does not contain an approval statement (7), which fulfills both: the scope covers the composite's subcomposite and the recommendation is "refused", and
**that** the safety relevant component is started or stopped automatically in dependence of the evaluation of the authorization or refusal.

2. Method according to claim 1, wherein the first composite instance (Z) is a sub-composite instance of a further composite instance (X), **characterized in that** the approval control function (5) evaluates the component instance (A, B, C, D, E) as being authorized only if the approval control function (5) evaluates the further composite instance (X) as being authorized by the approval authority.

3. Method according to any one of the claims 1 through 2, **characterized in that** the approval control function (5) controls metadata of component instances and/or interface instances which are deemed to be required by the approval authority, wherein the metadata controlled by approval control function (5) in particular characterizes at least one of: component definition, interface definition, component version, interface version, component variant, interface variant, the mandatory character of an interface or a sub-component, the life-cycle phase in which a component is or in which the components implied in an interface are, and hierarchy level of components implied in an interface.

4. Method according to any one of the claims 1 through 3, **characterized in that** a hardware component and its characteristics are made available to the approval control function (5) by providing a substitute software component comprising metadata formalizing the characteristics of the hardware component.

5. Method according to claim 4, **characterized in that** the scope further comprise the metadata of the substitute software component, in particular to enable the validations of authorization concerning the relationship between hardware sensors and software components taking the hardware-sensor as input, or concerning actors controlled by software components, or concerning computing facilities hosting the software components, or any combination of those.

6. Method according to claim 4 or 5 **characterized in**
**that** the hardware component is part of a hardware assembly, wherein the hardware component itself is a further hardware assembly of further hardware components, and wherein for the further hardware components further substitute software components are provided, and
**that** the substitute software component of the hardware assembly is made available to the framework (1, 1') as a composite of the further substitute software components.

7. Method according to claim 5 or 6 **characterized in**
**that** two hardware components are physically interfaced to each other, in particular within a hardware assembly, wherein for each hardware component a substitute software component is provided,
**that** for the physical interface between the hardware components a substitute interface is provided, wherein the substitute software components of the hardware components are interfaced by means of a substitute interface, and
**that** the substitute interface is made available to the approval control function (5).

8. Method according to any one of the claims 1 through 5, wherein a relationship of hierarchy or equivalence exists between fields and/or values of the metadata, wherein this relationship is known by the approval authority and is used by the approval authority to define the scopes of approvals, **characterized in that** this relationship is available to the approval control function (5) and is used to assess the bindings according to the intend of the approval authority.

9. Method according to any one of claims 1 through 8, **characterized in that** multiple approval authorities are provided, in particular approval authorities which are independent from each other, wherein for each approval authority an approval control is carried out.

10. Method according any one of the claims 1 through 9, wherein several composites (Y, Z) are evaluated to be authorized if, once composed together, the resulting composite (X) is covered by an approved recommendation and/or wherein several composites (Y, Z) are evaluated to be refused together if, once composed together the resulting composite (X) is evaluated by the approval function (5) to be refused.

11. Method according any one of the claims 1 through 9, wherein the approval control function (5) evaluates a composite to be authorized if it evaluates its subcomposites as being authorized, provided the composite is fully covered by the union of the authorized subcomposites and/or wherein the approval control function (5) evaluates a composite to be refused, if it evaluates a partial combination of components of the composite as being refused.

12. Method according to one of the preceding claims **characterized in that** the approval control function (5) evaluates and/or enforces the authorization of a component
• when the metadata implied in the authorization of an already started component have changed, wherein the authorization is withdrawn if the authorization is not valid anymore; in particular if the authorization is not valid anymore and no new valid authorization could be found, or
• when the metadata implied in the authorization of a not yet started component have changed, wherein the component is started if a valid authorization could be found.

13. Method according to one of the preceding claims **characterized in that** the component framework is part of an interlocking controlling a train station or an area of a station.

14. Use of a component framework for controlling a safety critical process, wherein an approval control function (5) is provided for evaluating whether a component instance is authorized or refused, wherein a safety relevant component is started or stopped automatically in dependence of the evaluation of the authorization or refusal, the evaluation being carried out according to the method for evaluation of an authorization of a component instance defined in claim 1.

15. Computer program product directly loadable into an internal memory of a digital computer comprising software code portions for carrying out a method according to any one of the claims 1 through 13.

## Patentansprüche

1. Computerimplementiertes Verfahren zum automatischen Starten oder Stoppen einer auszuführenden sicherheitsrelevanten Komponente, wodurch technisch eine Autorisierung oder Ablehnung der Verwendung einer Komponenteninstanz durchgesetzt wird, die innerhalb eines Komponenten-Frameworks in einem sicherheitsrelevanten Kontext auszuführen ist, wobei die auszuführende Komponenteninstanz (A, B, C, D, E) ein Subkomposit einer ersten Kompositinstanz (Z) ist, wobei das Komponenten-Framework Komponenteninstanzen und Schnittstelleninstanzen aufweist,
**dadurch gekennzeichnet,**
**dass** eine Bewertung der Autorisierung ausgeführt wird durch Verwenden eines Verfahrens zum Bewerten einer Autorisierung einer Komponenteninstanz (A, B, C, D, E), d.h. ob die Ausführung einer Komponenteninstanz (A, B, C, D, E) innerhalb des Komponenten-Frameworks (1, 1') in einem sicherheitsrelevanten Kontext durch eine Genehmigungsautorität autorisiert ist,
wobei das Verfahren umfasst:
Bereitstellen von Metadaten der Schnittstelleninstanzen und der Komponenteninstanzen in einer Form, die für die automatisierte Verarbeitung durch Software geeignet ist;
Bereitstellen einer Liste von Genehmigungsmitteilungen (7), wobei die Genehmigungsmitteilungen (7) die Autorisierung oder Ablehnung formulieren, die von der Genehmigungsautorität ausgegeben wird, wobei jede Genehmigungsmitteilung (7) eine Empfehlung und einen Anwendungsbereich aufweist,
wobei der Anwendungsbereich mittels Metadaten spezifiziert ist und Komponenten, Schnittstellen und Verbindungen mit den sicherheitsrelevanten Metadaten verknüpft, für welche die Empfehlung ausgegeben wird;
wobei die Empfehlung definiert, ob ihre zugeordnete Genehmigungsmitteilung den Einsatz erlaubt oder verhindert, wobei eine Empfehlung "genehmigt" oder "abgelehnt" lauten kann,
Bereitstellen einer Genehmigungskontrollfunktion (5) mit Zugriff auf die Liste der Genehmigungsmitteilungen (7),
wobei die Genehmigungskontrollfunktion (5) in einem Genehmigungsmanager (8) implementiert ist, welcher selbst eine Komponente ist, oder
wobei die Genehmigungskontrollfunktion (5) in dem Komponenten-Framework implementiert ist,
Ausführen einer Genehmigungskontrolle mittels der Genehmigungskontrollfunktion (5), wobei die Genehmigungskontrollfunktion (5) die Komponenteninstanz (A, B, C, D, E) nur dann als autorisiert bewertet, wenn die Genehmigungskontrollfunktion (5) eine Genehmigungsmitteilung (7) in der Liste der Genehmigungsmitteilungen (7) findet, welche beides erfüllt: der Anwendungsbereich deckt die Kompositinstanz (A, B, C, D, E) ab und die Empfehlung lautet "genehmigt", wobei festgelegt wird, dass der Anwendungsbereich die Kompositinstanz (A, B, C, D, E) abdeckt, wenn die Metadaten aller Komponenteninstanzen (A, B, C, D, E) und Schnittstelleninstanzen (I1) der ersten Kompositinstanz (Z) den Metadaten entsprechen, welche den Anwendungsbereich spezifizieren,
wobei die Genehmigungskontrollfunktion (5) eine Komponenteninstanz (A, B, C, D, E) nur als autorisiert bewertet, wenn die Genehmigungskontrollfunktion (5) feststellt, dass die Liste von Genehmigungsmitteilungen (7) keine Genehmigungsmitteilung enthält, welche beides erfüllt:
der Anwendungsbereich umfasst das Komposit der Komponente und
die Empfehlung lautet "abgelehnt" oder wenn die Genehmigungskontrollfunktion (5) bestimmt, dass die Liste der Genehmigungsmitteilungen (7) keine Genehmigungsmitteilung (7) enthält, welche beides erfüllt: der Anwendungsbereich deckt das Subkomposit des Komposits ab und die Empfehlung lautet "abgelehnt", und
**dass** die sicherheitsrelevante Komponente in Abhängigkeit der Bewertung der Autorisierung oder Ablehnung automatisch gestartet oder gestoppt wird.

2. Verfahren nach Anspruch 1, wobei die erste Kompositinstanz (Z) eine Subkompositinstanz einer weiteren Kompositinstanz (X) ist, **dadurch gekennzeichnet, dass** die Genehmigungskontrollfunktion (5) die Komponenteninstanz (A, B, C, D, E) nur als autorisiert bewertet, wenn die Genehmigungskontrollfunktion (5) die weitere Kompositinstanz (X) als durch die Genehmigungsautorität autorisiert bewertet.

3. Verfahren nach einem der Ansprüche 1 bis 2, **dadurch gekennzeichnet, dass** die Genehmigungskontrollfunktion (5) Metadaten von Komponenteninstanzen und/oder Schnittstelleninstanzen kontrolliert, die von der Genehmigungsautorität als erforderlich betrachtet werden, wobei die Metadaten, die von der Genehmigungskontrollfunktion (5) kontrolliert werden, insbesondere mindestens eines der Nachstehenden kennzeichnen: Komponentendefinition, Schnittstellendefinition, Komponentenversion, Schnittstellenversion, Komponentenvariante, Schnittstellenvariante, den obligatorischen Charakter einer Schnittstelle oder einer Teilkomponente, die Lebenszyklusphase, in welcher sich eine Komponente befindet oder in welcher sich die in einer Schnittstelle enthaltenen Komponenten befinden, und Hierarchieebene von in einer Schnittstelle enthaltenen Komponenten.

4. Verfahren nach einem der Ansprüche 1 bis 3, **dadurch gekennzeichnet, dass** eine Hardwarekomponente und ihre Eigenschaften der Genehmigungskontrollfunktion (5) zur Verfügung gestellt werden durch Bereitstellen einer Ersatz-Softwarekomponente umfassend Metadaten, welche die Eigenschaften der Hardwarekomponente formalisieren.

5. Verfahren nach Anspruch 4, **dadurch gekennzeichnet, dass** der Anwendungsbereich weiterhin die Metadaten der Ersatz-Softwarekomponente umfasst, insbesondere um die Validierungen der Autorisierung in Bezug auf das Verhältnis zwischen Hardwaresensoren und Softwarekomponenten unter Verwendung des Hardwaresensors als Eingang, oder in Bezug auf Aktoren, die von Softwarekomponenten kontrolliert werden, oder in Bezug auf Datenverarbeitungsanlagen, in denen die Softwarekomponenten enthalten sind, oder eine beliebige Kombination derselben zu ermöglichen.

6. Verfahren nach Anspruch 4 oder 5, **dadurch gekennzeichnet, dass** die Hardwarekomponente Teil einer Hardwareanordnung ist, wobei die Hardwarekomponente selbst eine weitere Hardwareanordnung von weiteren Hardwarekomponenten ist und wobei für die weiteren Hardwarekomponenten weitere Ersatzsoftwarekomponenten vorgesehen sind, und
dass die Ersatzsoftwarekomponente der Hardwareanordnung dem Framework (1, 1') als ein Komposit der weiteren Ersatzsoftwarekomponenten zur Verfügung gestellt wird.

7. Verfahren nach Anspruch 5 oder 6, **dadurch gekennzeichnet, dass** zwei Hardwarekomponenten physikalisch miteinander verbunden sind, insbesondere innerhalb einer Hardwareanordnung, wobei für jede Hardwarekomponente eine Ersatzsoftwarekomponente vorgesehen ist,
dass für die physikalische Schnittstelle zwischen den Hardwarekomponenten eine Ersatzschnittstelle vorgesehen ist,
wobei die Ersatzsoftwarekomponenten der Hardwarekomponenten mittels einer Ersatzschnittstelle miteinander verbunden sind, und
dass die Ersatzschnittstelle der Genehmigungskontrollfunktion (5) zur Verfügung gestellt wird.

8. Verfahren nach einem der Ansprüche 1 bis 5, wobei eine Hierarchie- oder Äquivalenzbeziehung zwischen Feldern und/oder Werten der Metadaten existiert, wobei diese Beziehung der Genehmigungsautorität bekannt ist und von der Genehmigungsautorität verwendet wird, um die Anwendungsbereiche der Genehmigungen zu definieren, **dadurch gekennzeichnet, dass** diese Beziehung der Genehmigungskontrollfunktion (5) zur Verfügung steht und verwendet wird, um die Bindungen entsprechend der Absicht der Genehmigungsautorität zu bewerten.

9. Verfahren nach einem der Ansprüche 1 bis 8, **dadurch gekennzeichnet, dass** mehrere Genehmigungsautoritäten vorgesehen sind, insbesondere Genehmigungsautoritäten, die voneinander unabhängig sind, wobei für jede Genehmigungsautorität eine Genehmigungskontrolle ausgeführt wird.

10. Verfahren nach einem der Ansprüche 1 bis 9, wobei mehrere Komposits (Y, Z) als autorisiert bewertet werden, wenn nach dem Zusammensetzen das resultierende Komposit (X) durch eine genehmigte Empfehlung abgedeckt ist und/oder wobei mehrere Komposits (Y, Z) als gemeinsam abgelehnt bewertet werden wenn nach dem Zusammensetzen das resultierende Komposit (X) von der Genehmigungsfunktion (5) als abgelehnt bewertet wird.

11. Verfahren nach einem der Ansprüche 1 bis 9, wobei die Genehmigungskontrollfunktion (5) ein Komposit als autorisiert bewertet, wenn seine Subkomposits als autorisiert bewertet werden, vorausgesetzt das Komposit ist von der Gesamtheit der autorisierten Subkomposits vollkommen abgedeckt und/oder wobei die Genehmigungskontrollfunktion (5) ein Komposit als abgelehnt bewertet, wenn sie eine Teilkombination von Komponenten des Komposits als abgelehnt bewertet.

12. Verfahren nach einem der vorhergehenden Ansprüche, **dadurch gekennzeichnet, dass** die Genehmigungskontrollfunktion (5) die Genehmigung einer Komponente bewertet und/oder durchsetzt
- wenn die Metadaten, die in der Autorisierung einer bereits gestarteten Komponente enthalten sind, sich geändert haben, wobei die Autorisierung zurückgenommen wird, wenn die Autorisierung nicht mehr gültig ist, insbesondere wenn die Autorisierung nicht mehr gültig ist und keine neue gültige Autorisierung gefunden werden konnte, oder
- wenn die Metadaten, die in der Autorisierung einer noch nicht gestarteten Komponente enthalten sind, sich geändert haben, wobei die Komponente gestartet wird, wenn eine gültige Autorisierung gefunden werden konnte.

13. Verfahren nach einem der vorhergehenden Ansprüche, **dadurch gekennzeichnet, dass** das Komponenten-Framework Teil eines Stellwerks ist, das einen Bahnhof oder einen Bereich eines Bahnhofs kontrolliert.

14. Verwendung eines Komponenten-Frameworks zum Kontrollieren eines sicherheitskritischen Prozesses, wobei eine Genehmigungskontrollfunktion (5) vorgesehen ist zum Bewerten, ob eine Komponenteninstanz autorisiert oder abgelehnt wird, wobei eine sicherheitsrelevante Komponente automatisch in Abhängigkeit der Bewertung der Autorisierung oder Ablehnung gestartet oder gestoppt wird, wobei die Bewertung entsprechend dem in Anspruch 1 definierten Verfahren zum Bewerten einer Autorisierung einer Komponenteninstanz ausgeführt wird.

15. Computerprogrammprodukt, das direkt in einen internen Speicher eines digitalen Computers geladen werden kann, umfassend Softwarecodeabschnitte zum Ausführen eines Verfahrens nach einem der Ansprüche 1 bis 13.

## Revendications

1. Procédé mis en œuvre par ordinateur pour démarrer ou arrêter automatiquement un composant pertinent de sécurité à exécuter, appliquant ainsi techniquement une autorisation ou un refus de déploiement d'une instance de composant à exécuter dans un cadre de composant dans un contexte pertinent de sécurité, l'instance de composant (A, B, C, D, E) à exécuter étant un sous-composite d'une première instance composite (Z) ; le cadre de composant comprenant des instances de composant et des instances d'interface,
**caractérisé en ce que**
une évaluation de l'autorisation est effectuée en utilisant un procédé destiné à une évaluation d'une autorisation d'une instance de composant (A, B, C, D, E), c'est-à-dire si l'exécution d'une instance de composant (A, B, C, D, E) dans le cadre du composant (1, 1'), dans un contexte pertinent de sécurité, est autorisée par une autorité, le procédé comprenant :
la fourniture de métadonnées des instances d'interface et des instances de composant sous une forme adaptée à un traitement automatisé par logiciel ;
la fourniture d'une liste d'instructions d'approbation (7), les instructions d'approbation (7) formulant l'autorisation ou le refus délivré par l'autorité d'approbation, chaque déclarations d'approbation (7) comprenant une recommandation et une portée,
dans lequel la portée est spécifiée au moyen de métadonnées et associe des composants, des interfaces et des liaisons aux métadonnées pertinentes de sécurité pour lesquelles la recommandation est émise ;
la recommandation définissant si son déclarations d'approbation associée permet ou empêche le déploiement, une recommandation pouvant être « approuvée » ou « refusée » ;
la fourniture d'une fonction de fonction de contrôle d'approbation (5) ayant accès à la liste d'instructions d'approbation (7),
dans lequel la fonction de fonction de contrôle d'approbation (5) est mise en œuvre dans un gestionnaire d'approbation (8), qui est un composant lui-même, ou
dans lequel la fonction de fonction de contrôle d'approbation (5) est mise en œuvre dans le cadre de composant,
la réalisation d'une fonction de contrôle d'approbation au moyen de la fonction de fonction de contrôle d'approbation (5), la fonction de fonction de contrôle d'approbation (5) évaluant l'instance de composant (A, B, C, D, E) comme étant autorisée uniquement si la fonction de fonction de contrôle d'approbation (5) trouve une déclarations d'approbation (7) dans la liste d'instructions d'approbation (7), qui remplit à la fois : la portée couvre l'instance composite (A, B, C, D, E) et la recommandation est « approuvée », la portée est dite couvrir l'instance composite (A, B, C, D, E) si les métadonnées de toutes les instances de composant (A, B, C, D, E) et les instances d'interface (I1) de la première instance composite (Z) correspondent aux métadonnées spécifiant la portée,
dans lequel la fonction de fonction de contrôle d'approbation (5) évalue une instance de composant (A, B, C, D, E) comme étant autorisée uniquement si la fonction de fonction de contrôle d'approbation (5) détermine que la liste d'instructions d'approbation (7) ne contient pas d'déclarations d'approbation (7), qui remplit à la fois : la portée couvre le composite du composant et la recommandation est « refusée », ou si la fonction de fonction de contrôle d'approbation (5) détermine que la liste d'instructions d'approbation (7) ne contient pas d'déclarations d'approbation (7), qui remplit à la fois : la portée couvre le sous-composé du composite et la recommandation est « refusée », et
que le composant pertinent de sécurité est démarré ou arrêté automatiquement en fonction de l'évaluation de l'autorisation ou du refus.

2. Procédé selon la revendication 1, dans lequel la première instance composite (Z) est une instance sous-composite d'une instance composite supplémentaire (X), **caractérisé en ce que** la fonction de fonction de contrôle d'approbation (5) évalue l'instance de composant (A, B, C, D, E) comme étant autorisée uniquement si la fonction de fonction de contrôle d'approbation (5) évalue l'instance composite supplémentaire (X) comme étant autorisée par l'autorité d'approbation.

3. Procédé selon l'une quelconque des revendications 1 à 2, **caractérisé en ce que** la fonction de fonction de contrôle d'approbation (5) commande des métadonnées d'instances de composant et/ou d'instances d'interface qui sont jugées nécessaires par l'autorité d'approbation, les métadonnées commandées par la fonction de fonction de contrôle d'approbation (5) caractérisant en particulier la définition de composant, la définition d'interface, et/ou la version de composant, et/ou la version d'interface, et/ou la variante de composant, et/ou la variante d'interface, et/ou le caractère obligatoire d'une interface et/ou un sous-composant, la phase du cycle de vie dans laquelle étant un composant ou dans laquelle se trouvent les composants impliqués dans une interface, et le niveau hiérarchique des composants impliqués dans une interface.

4. Procédé selon l'une quelconque des revendications 1 à 3, **caractérisé en ce qu'**un composant matériel et ses caractéristiques sont mis à la disposition de la fonction de fonction de contrôle d'approbation (5) en fournissant un composant logiciel de substitution comprenant des métadonnées formalisant les caractéristiques du composant matériel.

5. Procédé selon la revendication 4, **caractérisé en ce que** la portée comprend en outre les métadonnées du composant logiciel de substitution, en particulier pour permettre les validations d'autorisation concernant la relation entre capteurs matériels et composants logiciels prenant le capteur-matériel en entrée, ou concernant des acteurs commandés par des composants logiciels, ou concernant des installations informatiques hébergeant les composants logiciels, ou toute combinaison de ceux-ci.

6. Procédé selon la revendication 4 ou 5, **caractérisé en ce que**
le composant matériel fait partie d'un ensemble matériel, le composant matériel lui-même étant un ensemble matériel supplémentaire de composants matériels supplémentaires, et des composants matériels supplémentaires étant fournis pour des composants logiciels de substitution supplémentaires, et
**en ce que** le composant logiciel de substitution de l'ensemble matériel est mis à la disposition du cadre (1, 1') en tant que composite des composants logiciels de substitution supplémentaires.

7. Procédé selon la revendication 5 ou 6, **caractérisé en ce que**
deux composants matériels sont physiquement interfacés l'un à l'autre, en particulier au sein d'un ensemble matériel, un composant logiciel de substitution étant prévu pour chaque composant matériel,
**en ce que** pour l'interface physique, une interface de substitution est fournie entre les composants matériels, les composants logiciels de substitution des composants matériels étant interfacés au moyen d'une interface de substitution, et
**en ce que** l'interface de substitution est mise à la disposition de la fonction de fonction de contrôle d'approbation (5).

8. Procédé selon l'une quelconque des revendications 1 à 5, dans lequel une relation de hiérarchie ou d'équivalence existe entre les champs et/ou les valeurs des métadonnées, cette relation étant connue de l'autorité d'approbation et utilisée par l'autorité d'approbation pour définir les portées d'approbations, **caractérisé en ce que** cette relation est disponible pour la fonction de fonction de contrôle d'approbation (5) et est utilisée pour évaluer les liaisons selon l'intention de l'autorité d'approbation.

9. Procédé selon l'une quelconque des revendications 1 à 8, **caractérisé en ce que** plusieurs autorités d'approbation sont prévues, en particulier des autorités d'approbation qui sont indépendantes les unes des autres, une fonction de contrôle d'approbation étant effectuée pour chaque autorité d'approbation.

10. Procédé selon l'une quelconque des revendications 1 à 9, dans lequel plusieurs composites (Y, Z) sont évalués pour être autorisés si, une fois constitués ensemble, le composite résultant (X) est couvert par une recommandation approuvée et/ou dans lequel plusieurs composites (Y, Z) sont évalués pour être refusés ensemble si, une fois constitués ensemble, le composite (X) résultant est évalué par la fonction d'approbation (5) pour être refusé.

11. Procédé selon l'une quelconque des revendications 1 à 9, dans lequel la fonction de fonction de contrôle d'approbation (5) évalue un composite à autoriser si elle évalue ses sous-composés comme étant autorisés, à condition que le composite soit entièrement couvert par l'union des sous-composés autorisés et/ou dans lequel la fonction de fonction de contrôle d'approbation (5) évalue un composite à refuser, si elle évalue une combinaison partielle de composants du composite comme étant refusée.

12. Procédé selon l'une des revendications précédentes, **caractérisé en ce que** la fonction de fonction de contrôle d'approbation (5) évalue et/ou applique l'autorisation d'un composant
• lorsque les métadonnées impliquées dans l'autorisation d'un composant déjà démarré ont changé, l'autorisation étant retirée si l'autorisation n'est plus valide ; en particulier si l'autorisation n'est plus valide et qu'aucune nouvelle autorisation valide n'a pu être trouvée, ou
• lorsque les métadonnées impliquées dans l'autorisation d'un composant non encore démarré ont changé, le composant étant démarré si une autorisation valide a pu être trouvée.

13. Procédé selon l'une des revendications précédentes, **caractérisé en ce que** le cadre de composant fait partie d'un enclenchement commandant une gare ou une zone d'une gare.

14. Utilisation d'un cadre de composant pour commander un processus critique de sécurité, une fonction de fonction de contrôle d'approbation (5) étant prévue pour évaluer si une instance de composant est autorisée ou refusée, un composant pertinent de sécurité étant démarré ou arrêté automatiquement en fonction de l'évaluation de l'autorisation ou du refus, l'évaluation étant effectuée selon le procédé d'évaluation d'une autorisation d'une instance de composant défini dans la revendication 1.

15. Produit-programme informatique chargeable directement dans une mémoire interne d'un ordinateur numérique comprenant des parties de code logiciel pour effectuer un procédé selon l'une quelconque des revendications 1 à 13.
